# EUROPÄISCHE PATENTSCHRIFT

(11) **EP 3 268 770 B1**
(45) Veröffentlichungstag und Bekanntmachung des Hinweises auf die Patenterteilung: **31.03.2021**
(21) Anmeldenummer: 16731771.8
(22) Anmeldetag: 20.05.2016
(51) Int. Cl.: G01S 17/74, G01S 17/02, G01S 13/74, G01S 13/86, G01S 3/782, G01S 13/76, G01S 17/86

(54) **VORRICHTUNG ZUR KENNZEICHNUNG EINES GEGENSTANDES**
DEVICE FOR IDENTIFYING AN OBJECT
DISPOSITIF DE MARQUAGE D'UN OBJET

(30) Priorität: 27.05.2015 DE 102015209707
(43) Veröffentlichungstag der Anmeldung: 17.01.2018
(73) Patentinhaber: Tridonic GmbH & Co. KG, 6851 Dornbirn (AT)
(72) Erfinder: MOORMANN, Christan, 22587 Hamburg (DE)
(74) Vertreter: Rupp, Christian
(86) Internationale Anmeldenummer: PCT/AT2016/050149
(87) Internationale Veröffentlichungsnummer: WO 2016/187629

(56) Entgegenhaltungen:
- WO-A1-02/37721
- DE-A1-102013 015 222
- US-A- 5 917 425
- US-A1- 2012 162 633
- US-A1- 2014 356 000
- US-A1- 2014 375 982
- US-A1- 2015 002 292

## Beschreibung

### 1. Gebiet der Erfindung

Die vorliegende Erfindung betrifft eine Vorrichtung zur Kennzeichnung eines Gegenstandes, ein System zur Ortsbestimmung eines Gegenstandes und ein Verfahren zur Ortsbestimmung eines Gegenstandes.

### 2. Hintergrund

Im Stand der Technik sind verschiedene Vorrichtungen bekannt, mit denen Gegenstände gekennzeichnet werden können und mit Hilfe derer eine Ortsbestimmung der Vorrichtung bzw. des Gegenstandes innerhalb eines bestimmten Bereichs (beispielsweise innerhalb einer Lagerhalle, einer Montagehalle, einer Sortierhalle, einer Warenumschlaghalle, etc.) durchgeführt werden kann.

Derartige Vorrichtungen umfassen dabei insbesondere sogenannte RFID-Chips bzw. RFID-Sender (*"Radio Frequency Identification"),* die insbesondere als Etikett (als sogenanntes *"Tag"*) auf einen Gegenstand aufgeklebt werden können. Typischerweise umfasst ein RFID-Sender einen Speicher für Informationen, in dem insbesondere Informationen zum gekennzeichneten Gegenstand, wie beispielsweise eine Identifikationsnummer, eine Seriennummer oder dergleichen, hinterlegt werden können. Diese Informationen können anschließend mittels eines entsprechenden RFID-Lesegeräts bzw. eines RFID-Empfängers ausgelesen werden.

Zur Ortsbestimmung bzw. zur Lokalisierung von Gegenständen werden zunächst in einem Bereich, in dem eine Ortsbestimmung des Gegenstandes erfolgen soll, verschiedene ortsfest installierte RFID-Empfängern angeordnet, deren Positionen bekannt sind. Typischerweise werden für ein derartiges System RFID-Sender-/Empfängereinheiten verwendet, die über einen Abstand von mehreren Metern eine Funkverbindung aufbauen können, so dass der Speicher des am Gegenstand angebrachten RFID-Senders entsprechend ausgelesen werden kann. Eine Ortsbestimmung des Gegenstandes bzw. des RFID-Senders ergibt sich dann durch die Information welcher der RFID-Empfänger eine Funkverbindung mit dem am Gegenstand angebrachten RFID-Sender aufbauen konnte. Die Genauigkeit der Ortsbestimmung ist dabei wesentlich von der Anzahl der im Bereich angeordneten RFID-Empfänger abhängig. Je genauer dabei eine Ortsbestimmung durchführbar sein soll, umso mehr RFID-Empfänger müssen im Bereich angeordnet werden, was wiederrum zu höheren Kosten führt. Eine Ortsbestimmung mittels derartiger RFID-Sender-/Empfängereinheiten ist daher in der Praxis auf eine Auflösung von mehreren Metern begrenzt. Somit besteht in der Praxis keine Möglichkeit den genauen Bewegungsverlauf eines mit einem RFID-Sender ausgestatteten Gegenstandes zu erfassen.

Ferner ist es bekannt einen Gegenstand mit einem sichtbar angeordneten Etikett zu versehen und die auf dem Etikett enthaltenen Informationen mittels eines Kamerasystems zu erfassen und die erfassten Informationen über eine Datenverarbeitungseinrichtung auszuwerten, um zu bestimmen, an welchem Ort ein Gegenstand derzeit angeordnet ist bzw. um zu ermitteln, welchen Ortsveränderungen ein Gegenstand im Bereich unterzogen wurde. Soweit eine lückenlose Erfassung bzw. eine lückenlose Nachverfolgung des Bewegungsverlaufs des Gegenstandes bereitgestellt werden soll, ist es allerdings notwendig, dass der Gegenstand durchgehend von Kameras erfasst wird, was wiederrum nur mit einer entsprechend hohen Anzahl von Kameras möglich ist, die im Bereich installiert und entsprechend gewartet werden müssen. Ferner benötigt eine Ortsbestimmung mittels eines solchen Kamerasystems eine vergleichsweise leistungsstarke und damit teure Datenverarbeitungsanlage, da eine (Bild-)Auswertung der erfassten Kamerasignale entsprechend aufwändig ist.

Druckschriften US 2015/002292 A1, US 2014/375982 A1, DE 10 2013 015222 A1, WO 02/37721 A1, US 2014/356000A1 sowie US 5 917 425 A offenbaren jeweils eine Vorrichtung zur Kennzeichnung eines Gegenstandes gemäß dem Oberbegriff des unabhängigen Anspruchs 1.

Druckschrift US 2012/162633 A1 offenbart eine Vorrichtung zur Lokalisierung eines Gegenstandes mit Mitteln zur Erfassung einer Phasendifferenz zwischen Lichtsignalen von einer oder mehreren Leuchtvorrichtungen.

Ausgehend von diesem Stand der Technik stellt sich die vorliegende Erfindung die Aufgabe, eine Vorrichtung, ein System und ein Verfahren zur genauen und kostengünstigen Ortsbestimmung eines Gegenstands bzw. zur genauen und kostengünstigen Erfassung des Bewegungsverlaufs eines Gegenstandes anzugeben.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### 3. Ausführliche Beschreibung der Erfindung

Eine erfindungsgemäße Vorrichtung zur Kennzeichnung eines Gegenstandes, umfasst: zumindest eine Licht-Empfangseinheit zum Empfang von Lichtsignalen, wobei die Licht-Empfangseinheit derart eingerichtet ist, um Informationen von positionsfest angeordneten Leuchtvorrichtungen, die zumindest eine Licht-Sendeeinheit zum Senden von Lichtsignalen umfassen, zu empfangen; zumindest eine Funk-Sendeeinheit zum Senden von Funksignalen, wobei die Funk-Sendeeinheit derart eingerichtet ist, um zumindest die von der Licht-Empfangseinheit empfangenen Informationen an zumindest eine, vorzugsweise positionsfest angeordnete, Funk-Empfangseinheit zu senden.

Unter einer Licht-Empfangseinheit im Sinne der vorliegenden Erfindung ist dabei jede Einrichtung zu verstehen, die einen Empfang von optischen Lichtsignalen durch die Licht-Empfangseinheit der Vorrichtung von einer Licht-Sendeeinheit erlaubt. Derartige Licht-Sendeeinheiten sind dabei vorzugsweise in ein bestehendes Beleuchtungssystem integriert, das verschiedene in einem Bereich ortsfest angeordnete Leuchten umfasst. Eine solche Lichtkommunikation ist im Stand der Technik beispielsweise als sogenannte *"Visible Light Communication"* (VLC) bekannt. Hierbei werden Daten/Informationen mittels Leuchtdioden oder Leuchtstofflampen übertragen, die Licht im Hochfrequenzbereich modulieren können. Als Empfänger werden Photodedektoren (beispielsweise Leuchtdioden, organische Leuchtdioden, Photozellen, Mikrokanalplatten oder dergleichen) eingesetzt, die anhand des photoelektrischen Effekts Lichtsignale in ein elektrisches Signal umwandeln können. Unter einer Funk-Sendeeinheit im Sinne der vorliegenden Erfindung ist dabei jede Einrichtung zu verstehen, die ein Senden von Funksignalen erlaubt. Dabei wird vorliegend insbesondere eine RFID-Sendeinheit oder eine Bluetooth-Sendeeinheit eingesetzt.

In der einfachsten Ausbildung der vorliegenden Erfindung wird eine erfindungsgemäße Vorrichtung durch ein selbstklebendes Etikett bereitgestellt, das zumindest eine RFID-Anordnung als Funk-Sendeeinheit und zumindest eine VLC-Anordnung (*"Visible Light Communication")* als Licht-Empfangseinheit umfasst.

Zur Ortsbestimmung bzw. zur Nachverfolgung des Bewegungsmusters einer erfindungsgemäßen Vorrichtung bzw. eines Gegenstands, der mit einer solchen Vorrichtung ausgestattet ist, wird vorzugsweise wie folgt vorgegangen: zunächst wird ein Gegenstand mit einer erfindungsgemäßen Vorrichtung ausgerüstet (beispielsweise durch Aufkleben eines entsprechend ausgebildeten Etiketts); wird der Gegenstand anschließend in einem Bereich bewegt, der von Leuchten beleuchtet wird, die mit entsprechenden Licht-Sendeeinheiten ausgerüstet sind, kann die Licht-Empfangseinheit der Vorrichtung ortsabhängige Informationen (in der einfachsten Ausgestaltung schlichte Adress- und/oder Positionsinformationen der jeweiligen Leuchten) von den Licht-Sendeeinheiten empfangen und diese in einem Speicher ablegen; wird der Gegenstand anschließend in den Empfangsbereich einer Funk-Empfangseinheit bewegt, können die von der Licht-Empfangseinheit empfangenen und abgelegten Informationen an die Funk-Empfangseinheit mit Hilfe der Funk-Sendeeinheit der Vorrichtung übermittelt werden; basierend auf den übertragenen Informationen kann einerseits das bereits zurückgelegte Bewegungsprofil des Gegenstandes bestimmt werden, als auch die derzeitige Position des Gegenstandes ermittelt/extrapoliert werden.

Vorteilhafterweise werden die durch die Funk-Empfangseinheit erhaltenen Informationen zur Verarbeitung und Analyse an eine zentrale Datenverarbeitungsvorrichtung übermittelt, wobei die Leistungsanforderungen an eine solche Datenverarbeitungsanlage erheblich geringer sind, als die Leistungsanforderungen, die an bildverarbeitende Datenverarbeitungsanlagen gestellt werden, wie sie bei einer Ortsbestimmung mit Hilfe von Kamerasystemen notwendig sind. Ferner müssen auch an der Vorrichtung keine leistungsfähigen Datenverarbeitungseinrichtungen vorgesehen werden. Alternativ oder zusätzlich zur Auswertung der Informationen in einer zentralen Datenverarbeitungsanlage besteht auch die Möglichkeit, dass an der Vorrichtung selbst eine entsprechende Datenverarbeitungseinrichtung angeordnet wird, so dass eine Auswertung bzw. eine Teilauswertung auch bereits in der Vorrichtung selbst erfolgen kann.

Die erreichbare Auflösung der erfassten Bewegungen bzw. der Ortsbestimmung kann durch die vorliegende Erfindung erheblich verbessert werden. Zum einen da die zur Ortsbestimmung verwendeten Leuchten typischerweise bereits in ausreichender Zahl vorhanden sind (insbesondere in Lagerhallen, Werkshallen, Warenumschlagplätzen und dergleichen), zumindest wenn eine arbeitsplatztaugliche Beleuchtung bereitgestellt werden muss. In diesem Zusammenhang ist auch darauf hinzuweisen, dass zum Empfang der Lichtsignale keine Notwendigkeit besteht, dass zwischen dem Gegenstand und der Leuchtvorrichtung eine frei Sicht besteht. Ferner besteht die Möglichkeit zur Ortsbestimmung auch die unterschiedlichen Intensitäten der empfangenen Licht-Signale der unterschiedlichen Leuchten zu nutzen, so dass dadurch eine hochgenaue Ortsbestimmung der Vorrichtung bzw. des Gegenstandes möglich ist. In der Praxis hat sich gezeigt, dass die Genauigkeit der Ortsbestimmung um ein, zwei Größenordnungen auf eine Auflösung von wenigen Zentimetern verbessert werden kann.

Nachdem vorliegend die ohnehin notwendigen Beleuchtungsinfrastruktur verwendet werden kann, die entweder bereits entsprechende Licht-Sendeeinheiten umfassen oder mit solchen Licht-Sendeeinheiten vergleichsweise kostengünstig nachgerüstet werden können, kann durch eine erfindungsgemäße Vorrichtung eine vergleichsweise kostengünstige, dabei allerdings sehr genaue Orts- und Bewegungsermittlung eines Gegenstandes bereitgestellt werden.

Durch die mögliche hohe Auflösung der Ortsbestimmung können, insbesondere bei autonom bewegten Gegenständen, die Bewegungspfade einzelner Gegenstände wesentlich näher zueinander vorgesehen werden, ohne dabei Betriebsstörungen befürchten zu müssen. Auch können Materialflüsse (beispielsweise hin zu Produktionslinien in Montagebereichen) wesentlich effizienter erfasst, gesteuert und koordiniert werden, so dass eine entsprechende Effizienzsteigerung im Produktionsprozess erreicht werden kann. Ferner besteht aufgrund der verbesserten Orts- bzw. Positionsauflösung die Möglichkeit, Lagerflächen effizienter nutzen zu können, da eine dichtere Positionierung bzw. eine genauere Differenzierung unterschiedlicher Gegenstände möglich ist. Aufgrund der verbesserten Auflösung besteht schließlich auch die Möglichkeit Sortieranlagen oder Warenumschlagplätze mit einer dichteren Belegung von Gegenständen und damit mit einer höheren Auslastung betreiben zu können.

Im Ergebnis schlägt die vorliegende Erfindung also vor, durch die ortsfesten Leuchtvorrichtungen zunächst Informationen, die einen Rückschluss auf die erfolgten Bewegungen der Vorrichtung erlauben, an die Vorrichtung zu übermitteln und diese Informationen an eine Funk-Empfangseinheit zu übermitteln, sobald sich die Vorrichtung in Reichweite der Funk-Empfangseinheit befindet. Anschließend kann, vorzugsweise in einer zentralen Datenverarbeitungsanlage, mit der die Funk-Empfangseinheit verbunden ist (beispielsweise drahtlos über eine WiFi-Verbindung oder drahtgebunden über eine entsprechende Netzanbindung), das Bewegungsprofil bzw. eine aktuelle Position der Vorrichtung und damit des Gegenstandes hochgenau bestimmt werden.

Vorteilhafterweise ist die Licht-Empfangseinheit der Vorrichtung derart eingerichtet, dass diese zumindest Adress- und/oder Positionsinformationen von den positionsfest angeordneten Leuchtvorrichtungen empfangen kann. Zusätzlich zu diesen Informationen ist es von Vorteil, wenn die Vorrichtung weiterhin Mittel umfasst, um den Einfallswinkel der Lichtsignale auf die Vorrichtung zu erfassen, beispielsweise Gitterfilter, Polarisationsfilter oder dergleichen. Dadurch besteht die Möglichkeit die Auflösung der Ortsbestimmung noch weiter erhöhen zu können.

Vorzugsweise umfasst die Vorrichtung darüber hinaus Sensormittel zur Erfassung von Lage- und/oder Bewegungsinformationen der Vorrichtung. In diesem Zusammenhang werden besonders bevorzugt Beschleunigungssensoren oder Drehratensensoren (Gyroskope) eingesetzt. Dadurch besteht die Möglichkeit die vorliegende Vorrichtung nicht nur zur Ortsbestimmung einsetzen zu können, sondern darüber hinaus zu ermitteln, ob der Gegenstand sachgemäß bzw. in der richtigen Ausrichtung transportiert wurde, so dass die vorliegende Vorrichtung auch zur Qualitätssicherung bzw. als Sicherheitseinrichtung eingesetzt werden kann.

Die Vorrichtung umfasst vorzugsweise Mittel, um eine Phasendifferenz zwischen Lichtsignalen von einer oder mehreren Leuchtvorrichtungen zu erfassen. Eine Ortsbestimmung kann dadurch entweder zusätzlich oder alternativ zu den Adress- und/oder Positionsinformationen oder den wechselnden Lichtintensitäten auch in Abhängigkeit unterschiedlich eingestellter Phasen der Licht-Sendeeinheiten der Leuchten vorgenommen werden.

Vorteilhafterweise umfasst die Vorrichtung zumindest einen Zeitgeber (beispielsweise einen Zeitgeber-Chip) zur Bereitstellung einer Zeitinformation, die den empfangenen und/oder erfassten Informationen zugeordnet werden kann. Dadurch kann der Ortsbestimmung des Gegenstandes bzw. dem Bewegungsprofil des Gegenstandes auch entsprechende Zeitinformationen zugeordnet werden, so dass dadurch ermittelt werden kann, wann ein Gegenstand wo und wie lange angeordnet war und mit welcher Geschwindigkeit und Beschleunigung ein Gegenstand dabei bewegt wurde. Alternativ oder zusätzlich kann eine entsprechende Zeitinformation auch durch die Leuchten übermittelt und entsprechend zugeordnet werden.

Wie oben bereits ausgeführt, ist die Funk-Sendeeinheit der Vorrichtung vorzugsweise eine RFID-Sendeeinheit und/oder eine Bluetooth-Sendeeinheit. Die RFID-Sendeeinheit kann dabei als passive Sendeeinheit ohne eigene Energieversorgung oder als aktive Sendeeinheit mit eigener Energieversorgung ausgestattet sein, wobei durch aktive Sendeeinheiten grundsätzlich größere Übertragungsreichweiten bereitgestellt werden können.

Vorteilhafterweise umfasst die Vorrichtung zumindest eine zusätzliche Speichereinheit für die empfangenen und/oder erfassten Informationen. Dadurch besteht die Möglichkeit größere Datenmengen in der Vorrichtung hinterlegen zu können, was insbesondere dann von Vorteil ist, wenn die Abstände der Funk-Empfangseinheiten vergleichsweise groß gewählt sind.

Die erfindungsgemäße Vorrichtung umfasst ferner zumindest einen Energiegewinnungsschaltkreis, der zumindest den an der Licht-Empfangseinheit vorgesehenen Photodetektor zum Erzeugen eines Fotostroms nutzt, wobei zumindest eine Energiespeichereinrichtung zum Speichern des Fotostroms vorgesehen ist. Dadurch besteht die Möglichkeit, den notwendigen Energiebedarf der Vorrichtung, insbesondere zum Betrieb der Licht-Empfangseinheit und der Funk-Sendeeinheit, durch den ohnehin erfolgenden Lichteinfall bereitstellen zu können bzw. die Leistungsentnahme einer an der Vorrichtung vorgesehenen Energiequelle (beispielsweise Batterien, Akkumulatoren etc.) zu verringern, so dass die maximale Betriebszeit einer erfindungsgemäßen Vorrichtung entsprechend erhöht werden kann, bevor die Energiequelle ausgetauscht oder wieder aufgeladen werden muss.

Der Energiegewinnungsschaltkreis umfasst einen Laderegler, der eine Anpassung des Energiegewinnungsschaltkreises an unterschiedlich hohe Fotoströme aufgrund unterschiedlicher Lichteinstrahlungen bereitstellt. Der Laderegler ist dabei ein sogenannter Maximal-Leistungspunkt-Regler ("*Maximum Powerpoint Controller").* Derart Energiegewinnungsschaltkreise werden beispielsweise in Fotovoltaikanlagen eingesetzt und sollen eine optimale *"Energieentnahme"* und Speicherung gewährleisten. Vorteilhafterweise umfasst die Speichervorrichtung einen Akkumulator und/oder einen (Lade-)Kondensator. Derartige Speichervorrichtungen sind in einer Vielzahl von unterschiedlichen Ausführungsformen bekannt, insbesondere mit unterschiedlichen Speicherkapazitäten, so dass eine Anpassung der Speicherkapazität der Speichervorrichtung an eine erfindungsgemäße Vorrichtung, insbesondere an die Leistungsaufnahme der Licht-Empfangseinheit bzw. der Funk-Sendeeinheit auf einfache Weise erfolgen kann.

Wie oben bereits ausgeführt, ist eine erfindungsgemäße Vorrichtung besonders bevorzugt als Etikett ("*Tag*") ausgebildet, wobei es besonders bevorzugt ist, dass diese als selbstklebendes Etikett ausgebildet ist.

Weiterhin betrifft die vorliegende Erfindung ein System zur Ortsbestimmung eines Gegenstandes, umfassend: zumindest einen ortsbeweglichen Gegenstand, an dem zumindest eine oben beschriebene Vorrichtung angeordnet ist; zumindest eine ortsfeste Leuchtvorrichtung mit zumindest einer Licht-Sendeeinheit zum Senden von Informationen an die Licht-Empfangseinheit der Vorrichtung mittels Lichtsignale; zumindest eine ortsfeste Funk-Empfangseinheit zum Empfang von Informationen von der Funk-Sendeeinheit der Vorrichtung mittels Funksignale; zumindest eine Auswerteeinheit zur Bereitstellung von Ortsinformationen basierend auf den empfangenen Informationen.

Ferner betrifft die vorliegende Erfindung ein Verfahren zur Ortsbestimmung eines Gegenstandes, umfassend zumindest die folgenden Schritte: Bereitstellen eines erfindungsgemäßen Systems; Senden von Informationen mittels zumindest einer Licht-Sendeeinheit einer ortsfesten Leuchtvorrichtung an die Licht-Empfangseinheit der Vorrichtung; Senden von Informationen mittels der Funk-Sendeeinheit der Vorrichtung an die ortsfeste Funk-Empfangseinheit; Auswerten der von der ortsfesten Funk-Empfangseinheit empfangenen Funksignale und Bereitstellen von Ortsinformationen basierend auf den empfangenen Informationen.

### 4. Beschreibung einer bevorzugten Ausführungsform

Nachfolgend wird eine detaillierte Beschreibung der Figuren gegeben. Darin zeigt:
- **Figur 1**: eine schematische Ansicht einer bevorzugten Ausführungsform einer erfindungsgemäßen Vorrichtung zur Kennzeichnung eines Gegenstandes;
- **Figur 2**: eine schematische Ansicht eines erfindungsgemäßen Systems zur Ortsbestimmung eines Gegenstands mithilfe einer in Figur **1** gezeigten Vorrichtung.

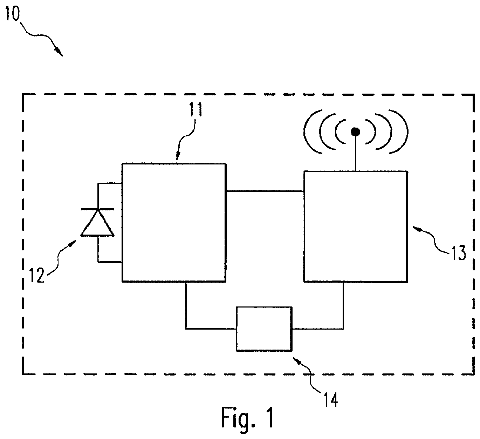

Figur 1 zeigt eine bevorzugte Ausführungsform einer erfindungsgemäßen Vorrichtung 10, die vorzugsweise als selbstklebendes Etikett ausgebildet ist.

Die Vorrichtung 10 umfasst zumindest eine Licht-Empfangseinheit 11, die zumindest einen Photodetektor 12 (beispielsweise eine oder mehrere: Leuchtdioden, organische Leuchtdioden, Photozellen, Mikrokanalplatten oder dergleichen) aufweist, um mittels des photoelektrischen Effekts eingehende Lichtsignale (sogenannte *"Visible Light Communication"* (VLC)) einer oder mehrere ortsfester Leuchten (nicht gezeigt) empfangen und in elektrische Signale umwandeln zu können.

Weiterhin umfasst die Vorrichtung 10 eine Funk-Sendeeinheit 13, vorliegend in Form einer RFID-Anordnung, die Daten an eine Funk-Empfangseinheit (nicht gezeigt) übermitteln kann, sobald sich die Vorrichtung 10 in Reichweite der Funk-Empfangseinheit befindet. Bei der RFID-Anordnung handelt es sich besonders bevorzugt um eine sogenannte aktive RFID-Sendeeinheit, die eine eigene Energieversorgung umfasst, da dadurch größere Sendereichweiten erreichbar sind als mit passiven RFID-Sendeeinheiten ohne eigene Energieversorgung.

Ferner umfasst die Vorrichtung 10 vorzugsweise zumindest eine Speichervorrichtung 14, in der die durch die Licht-Empfangseinheit 11 empfangenen Daten zumindest bis zur Übermittlung an die Funk-Empfangseinheit durch die Funk-Sendeeinheit 13 gespeichert werden können.

Wie oben bereits ausgeführt, kann die Vorrichtung 10 ferner Sensormittel insbesondere zur Erfassung von Lage- und/oder Bewegungsinformationen der Vorrichtung 10 umfassen (beispielsweise Beschleunigungssensoren oder Gyroskope), um die Vorrichtung 10 nicht nur zur Ortsbestimmung einzusetzen, sondern darüber hinaus auch ermitteln zu können, ob ein mit einer Vorrichtung 10 versehener Gegenstand sachgemäß bzw. in der richtigen Ausrichtung transportiert wird bzw. wurde. Die Vorrichtung 10 kann ferner Mittel umfassen, um eine Phasendifferenz zwischen Lichtsignalen von einer oder mehreren Leuchtvorrichtungen und/oder einen Einfallwinkel der Lichtsignale auf die Vorrichtung 10 zu erfassen. Weiterhin kann die Vorrichtung 10 einen Zeitgeber (beispielsweise einen Zeitgeber-Chip) zur Bereitstellung einer Zeitinformation umfassen, so dass den empfangenen und/oder den erfassten Daten eine korrespondierende Zeitinformation zugeordnet werden kann.

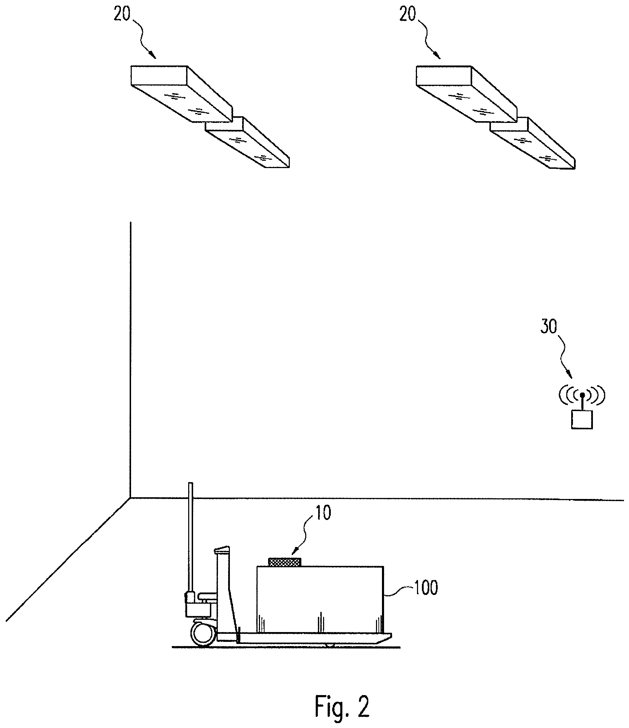

Figur 2 zeigt eine schematische Ansicht eines erfindungsgemäßen Systems zur Ortsbestimmung eines Gegenstandes 100, an dem eine in Figur **1** gezeigte erfindungsgemäße Vorrichtung 10 angeordnet ist.

Wie in Figur 2 gut zu erkennen ist, umfasst das System mehrere in einem Bereich (hier beispielhaft eine Lagerhalle) ortsfest angeordnete Leuchtvorrichtungen 20, die jeweils zumindest eine Licht-Sendeeinheit (beispielsweise in Form einer VLC-Anordnung, die beispielsweise mittels zumindest einer Leuchtdiode Lichtsignale senden kann) umfassen. Die Licht-Sendeeinheiten der Leuchtvorrichtungen 20 sind dabei derart eingerichtet, dass diese Lichtsignale an die Licht-Empfangseinheit 11 der Vorrichtung 10 senden können. Dabei senden die Licht-Sendeeinheiten insbesondere Adress- und/oder Positionsinformationen der jeweiligen Leuchtvorrichtungen 20 an die Vorrichtung 10, die diese Informationen zunächst zwischenspeichert. Wie oben bereits ausgeführt, umfasst die Vorrichtung 10 vorzugsweise auch Sensormittel zur Erfassung der Lage- und/oder Bewegungsinformationen und Mittel zur Erfassung einer Phasendifferenz oder eines Einfallwinkels der Lichtsignale. Vorteilhafterweise können durch die Vorrichtung 10 auch Intensitätsschwankungen der Lichtsignale erfasst werden. In diesem Fall werden auch diese weiteren Informationen durch die Vorrichtung 10, vorzugsweise zusammen mit korrespondierenden Zeitinformationen, gespeichert.

Ferner umfasst das erfindungsgemäße System zumindest eine Funk-Empfangseinheit 30 (hier beispielhaft in Form einer RFID-Empfangseinheit), die vorzugsweise ortsfest im Bereich angeordnet ist und die über ein Netzwerk mit einer Datenverarbeitungsanlage (beispielsweise drahtlos über eine WiFi-Verbindung oder drahtgebunden) verbunden ist.

Zur Ortsbestimmung bzw. zur Nachverfolgung des Bewegungsmusters einer erfindungsgemäßen Vorrichtung 10, und damit eines Gegenstands 100 wird vorzugsweise wie folgt vorgegangen:
- zunächst wird der Gegenstand 100 mit einer erfindungsgemäßen Vorrichtung 10 ausgerüstet (beispielsweise durch Aufkleben eines entsprechend ausgebildeten Etiketts);
- wird der Gegenstand 100 nunmehr in dem Bereich bewegt, senden die Licht-Sendeeinheiten der Leuchtvorrichtungen 20 (in kodierter oder nicht kodierter Weise) Lichtsignale an die Licht-Empfangseinheit 11 der Vorrichtung 10, die diese in elektrische Signale umwandelt und diese Daten zwischenspeichert (vorzugsweise in der entsprechend ausgelegten Speichervorrichtung 14); die übermittelten Lichtsignale umfassen dabei zumindest die jeweiligen Adress- und/oder Positionsinformationen der unterschiedlichen Leuchtvorrichtungen 20, so dass je nach Bewegungsverlauf des Gegenstandes 100 die unterschiedlichen Adress- und/oder Positionsinformationen der verschiedenen Leuchtvorrichtungen 20 erfasst und gespeichert werden können; wie bereits ausgeführt werden vorzugsweise auch Sensordaten, Phasendifferenzen zwischen den Lichtsignalen, Intensitätsänderungen der Lichtsignale, Einfallwinkel der Lichtsignale und/oder korrespondierende Zeitinformationen erfasst und zwischengespeichert;
- sobald die Vorrichtung 10 bzw. der Gegenstand 100 in den Empfangsbereich der zumindest einen, vorzugsweise ortsfest angeordneten, Funk-Empfangseinheit 30 bewegt wird, werden die zwischengespeicherten Informationen/Daten an die Funk-Empfangseinheit 30 mit Hilfe der Funk-Sendeeinheit 13 der Vorrichtung 10 übermittelt;
- die Funk-Empfangseinheit 30 übermittelt die empfangenen Daten an eine Datenverarbeitungsanlage, die basierend auf den übertragenen Informationen einerseits das bereits zurückgelegte Bewegungsprofil des Gegenstandes 100 als auch die derzeitige Position des Gegenstandes 100 ermitteln kann.

Die vorliegende Erfindung ist nicht auf das vorhergehende Ausführungsbeispiel beschränkt, solange sie vom Gegenstand der folgenden Ansprüche umfasst ist. Insbesondere ist die vorliegende Erfindung nicht auf einen speziellen Anwendungsbereich beschränkt, sondern kann in allen Anwendungen eingesetzt werden, bei denen ein Bedarf für eine kostengünstige und hochgenaue Ortsbestimmung besteht (beispielsweise innerhalb einer Lagerhalle, einer Montagehalle, einer Sortierhalle, einer Warenumschlaghalle, bei beleuchteten Außenanalgen, etc.). Ferner besteht die Möglichkeit, dass die Vorrichtung 10 nicht nur mit den oben beschriebenen 1-Kanal-Empfangs-/Sendeeinheiten ausgerüstet wird, sondern mit 2-Kanal-Empfangs-/Sendeeinheiten, so dass ein wechselseitiger Datenaustausch zwischen den Leuchtvorrichtungen und der Vorrichtung bzw. der Funk-Empfangseinheit und der Vorrichtung bereitgestellt werden kann.

## Patentansprüche

1. Vorrichtung (10) zur Kennzeichnung eines Gegenstandes (100), umfassend:
- zumindest eine Licht-Empfangseinheit (11) zum Empfang von Lichtsignalen, wobei die Licht-Empfangseinheit (11) derart eingerichtet ist, um Informationen von positionsfest angeordneten Leuchtvorrichtungen (20), die zumindest eine Licht-Sendeeinheit zum Senden von Lichtsignalen umfassen, zu empfangen;
- zumindest eine Funk-Sendeeinheit (13) zum Senden von Funksignalen, wobei die Funk-Sendeeinheit (13) derart eingerichtet ist, um zumindest die von der Licht-Empfangseinheit (11) empfangenen Informationen an zumindest eine Funk-Empfangseinheit (30) zu senden,
**dadurch gekennzeichnet, dass** die Vorrichtung (10) zumindest einen Energiegewinnungsschaltkreis mit zumindest einer Leuchtdiode zum Erzeugen eines Fotostroms umfasst und zumindest eine Energiespeichereinrichtung zum Speichern des Fotostroms,
wobei der Energiegewinnungsschaltkreis einen Laderegler umfasst, um eine Anpassung des Energiegewinnungsschaltkreises an unterschiedlich hohe Fotoströme aufgrund unterschiedlicher Lichteinstrahlung bereitzustellen, wobei der Laderegler ein Maximal-Leistungspunkt-Regler ist.

2. Vorrichtung (10) nach Anspruch 1, wobei die Licht-Empfangseinheit (11) der Vorrichtung (10) derart eingerichtet ist, um Adress- und/oder Positionsinformationen von den positionsfest angeordneten Leuchtvorrichtungen (20) zu empfangen.

3. Vorrichtung (10) nach einem der Ansprüche 1 oder 2, wobei die Vorrichtung (10) Sensormittel zur Erfassung von Lage- und/oder Bewegungsinformationen der Vorrichtung (10) umfasst.

4. Vorrichtung (10) nach Anspruch 3, wobei die Sensormittel Beschleunigungssensoren und/oder Drehratensensoren umfassen.

5. Vorrichtung (10) nach einem der vorhergehenden Ansprüche, wobei die Vorrichtung (10) Mittel umfasst, um den Einfallswinkel der Lichtsignale auf die Vorrichtung (10) zu erfassen.

6. Vorrichtung (10) nach einem der vorhergehenden Ansprüche, wobei die Vorrichtung (10) Mittel umfasst, um eine Phasendifferenz zwischen Lichtsignalen von einer oder mehreren Leuchtvorrichtungen (20) zu erfassen.

7. Vorrichtung (10) nach einem der vorhergehenden Ansprüche, wobei die Vorrichtung (10) zumindest einen Zeitgeber zur Bereitstellung einer Zeitinformation umfasst, um Zeitinformationen den empfangenen und/oder erfassten Informationen zuzuordnen.

8. Vorrichtung (10) nach einem der vorhergehenden Ansprüche, wobei die Licht-Empfangseinheit (11) der Vorrichtung (10) zumindest eine Leuchtdiode (12) umfasst, die zum Empfang von Lichtsignalen eingerichtet ist.

9. Vorrichtung (10) nach einem der vorhergehenden Ansprüche, wobei die Funk-Sendeeinheit (13) der Vorrichtung (10) eine RFID-Sendeeinheit und/oder eine Bluetooth-Sendeeinheit umfasst.

10. Vorrichtung (10) nach einem der vorhergehenden Ansprüche, wobei die Vorrichtung (10) zumindest eine Speichereinheit (14) für die empfangenen und/oder erfassten Informationen umfasst.

11. Vorrichtung (10) nach einem der vorhergehenden Ansprüche, wobei die Vorrichtung (10) als selbstklebendes Etikett ausgebildet ist.

12. System zur Ortsbestimmung eines Gegenstandes (100), umfassend:
- zumindest einen ortsbeweglichen Gegenstand (100), an dem zumindest eine Vorrichtung (10) nach einem der Ansprüche 1 bis 11 angeordnet ist;
- zumindest eine ortsfeste Leuchtvorrichtung (20) mit zumindest einer Licht-Sendeeinheit zum Senden von Informationen an die Licht-Empfangseinheit (11) der Vorrichtung (10) mittels Lichtsignale;
- zumindest eine Funk-Empfangseinheit (30) zum Empfang von Informationen von der Funk-Sendeeinheit (13) der Vorrichtung (10) mittels Funksignale;
- zumindest eine Auswerteeinheit zur Bereitstellung von Ortsinformationen basierend auf den empfangenen Informationen.

13. Verfahren zur Ortsbestimmung eines Gegenstandes (100), umfassend die folgenden Schritte:
- Bereitstellen eines Systems nach Anspruch 12;
- Senden von Informationen mittels einer Licht-Sendeeinheit zumindest einer ortsfesten Leuchtvorrichtung (20) an die Licht-Empfangseinheit (11) der Vorrichtung (10);
- Senden von Informationen mittels der Funk-Sendeeinheit (13) der Vorrichtung (10) an die Funk-Empfangseinheit (30);
- Auswerten der von der Funk-Empfangseinheit (30) empfangenen Funksignale und Bereitstellen von Ortsinformationen basierend auf den empfangenen Informationen.

## Claims

1. Device (10) for identifying an object (100), comprising:
- at least one light-receiving unit (11) for receiving light signals, wherein the light-receiving unit (11) is designed to receive information from positionally fixed lighting devices (20) which comprise at least one light-transmitting unit for transmitting light signals;
- at least one radio-transmitting unit (13) for transmitting radio signals, wherein the radio-transmitting unit (13) is designed to transmit at least the information received by the light-receiving unit (11) to at least one radio-receiving unit (30),
**characterized in that** the device (10) comprises at least one energy-harvesting circuit having at least one light-emitting diode for generating a photocurrent, and at least one energy storage device for storing the photocurrent,
wherein the energy-harvesting circuit comprises a charging regulator for providing an adaptation of the energy-harvesting circuit to photocurrents of levels that differ due to different light irradiation, wherein the charging regulator is a maximum power point regulator.

2. Device (10) according to claim 1, wherein the light-receiving unit (11) of the device (10) is designed to receive address and/or position information from the positionally fixed lighting devices (20).

3. Device (10) according to one of claims 1 or 2, wherein the device (10) comprises sensor means for detecting position and/or movement information of the device (10).

4. Device (10) according to claim 3, wherein the sensor means comprise acceleration sensors and/or rotation rate sensors.

5. Device (10) according to one of the preceding claims, wherein the device (10) comprises means for detecting the angle of incidence of the light signals on the device (10).

6. Device (10) according to one of the preceding claims, wherein the device (10) comprises means for detecting a phase difference between light signals from one or more lighting devices (20).

7. Device (10) according to one of the preceding claims, wherein the device (10) comprises at least one timer for providing time information, in order to assign time information to the received and/or detected information.

8. Device (10) according to one of the preceding claims, wherein the light-receiving unit (11) of the device (10) comprises at least one light-emitting diode (12) which is designed to receive light signals.

9. Device (10) according to one of the preceding claims, wherein the radio-transmitting unit (13) of the device (10) comprises an RFID transmitting unit and/or a Bluetooth transmitting unit.

10. Device (10) according to one of the preceding claims, wherein the device (10) comprises at least one memory unit (14) for the received and/or detected information.

11. Device (10) according to one of the preceding claims, wherein the device (10) is designed as a self-adhesive label.

12. System for determining the location of an object (100), comprising:
- at least one mobile object (100) on which at least one device (10) according to one of claims 1 through 11 is arranged;
- at least one stationary lighting device (20) having at least one light-transmitting unit for transmitting information to the light-receiving unit (11) of the device (10) by means of light signals;
- at least one radio-receiving unit (30) for receiving information from the radio-transmitting unit (13) of the device (10) by means of radio signals;
- at least one evaluation unit for providing location information based upon the received information.

13. Method for determining the location of an object (100), comprising the following steps:
- providing a system according to claim 12;
- transmitting information by means of a light-transmitting unit of at least one stationary lighting device (20) to the light-receiving unit (11) of the device (10);
- transmitting information by means of the radio-transmitting unit (13) of the device (10) to the radio-receiving unit (30);
- evaluating the radio signals received by the radio-receiving unit (30) and providing location information based upon the received information.

## Revendications

1. Dispositif (10) de marquage d'un objet (100), comprenant :
- au moins une unité réceptrice de lumière (11) pour la réception de signaux lumineux, l'unité réceptrice de lumière (11) étant conçue pour recevoir des informations provenant de dispositifs d'éclairage (20) disposés à des positions fixes et qui comprennent au moins une unité d'émission de lumière pour émettre des signaux lumineux ;
- au moins une unité d'émission radio (13) pour l'émission de signaux radio, l'unité d'émission radio (13) étant conçue pour envoyer au moins les informations reçues par l'unité réceptrice de lumière (11) à au moins une unité de réception radio (30),
**caractérisé en ce que** le dispositif (10) comprend au moins un circuit de commutation de production d'énergie comprenant au moins une diode électroluminescente pour la production d'un courant photoélectrique et au moins un dispositif d'accumulation d'énergie pour l'accumulation du courant photoélectrique,
le circuit de commutation de production d'énergie comprenant un régulateur de charge, afin de fournir une adaptation du circuit de commutation de production d'énergie à des courants photoélectriques d'intensité différente en raison d'un rayonnement lumineux différent, le régulateur de charge étant un régulateur de point de puissance maximum.

2. Dispositif (10) selon la revendication 1, l'unité réceptrice de lumière (11) du dispositif (10) étant conçue pour recevoir des informations d'adresse et/ou de position des dispositifs d'éclairage (20) disposés à des positions fixes.

3. Dispositif (10) selon l'une quelconque des revendications 1 ou 2, le dispositif (10) comprenant des moyens capteurs pour la détection d'informations d'emplacement et/ou de mouvement du dispositif (10).

4. Dispositif (10) selon la revendication 3, les moyens capteurs comprenant des capteurs d'accélération et/ou des capteurs de vitesse de rotation.

5. Dispositif (10) selon l'une quelconque des revendications précédentes, le dispositif (10) comprenant des moyens pour détecter un angle d'incidence des signaux lumineux sur le dispositif (10).

6. Dispositif (10) selon l'une quelconque des revendications précédentes, le dispositif (10) comprenant des moyens pour détecter une différence de phase entre les signaux lumineux d'un ou de plusieurs dispositifs d'éclairage (20).

7. Dispositif (10) selon l'une quelconque des revendications précédentes, le dispositif (10) comprenant au moins un minuteur pour la fourniture d'une information temporelle, afin d'associer des informations temporelles aux informations reçues et/ou détectées.

8. Dispositif (10) selon l'une quelconque des revendications précédentes, l'unité réceptrice de lumière (11) du dispositif (10) comprenant au moins une diode électroluminescente (12), qui est conçue pour la réception de signaux lumineux.

9. Dispositif (10) selon l'une quelconque des revendications précédentes, l'unité d'émission radio (13) du dispositif (10) comprenant une unité d'émission RFID et/ou une unité d'émission Bluetooth.

10. Dispositif (10) selon l'une quelconque des revendications précédentes, le dispositif (10) comprenant au moins une unité de mémoire (14) pour les informations reçues et/ou détectées.

11. Dispositif (10) selon l'une quelconque des revendications précédentes, le dispositif (10) étant conçu sous la forme d'une étiquette autocollante.

12. Système de localisation d'un objet (100), comprenant :
- au moins un objet (100) transportable, sur lequel est disposé au moins un dispositif (10) selon l'une quelconque des revendications 1 à 11 ;
- au moins un dispositif d'éclairage (20) à position fixe comprenant au moins une unité d'émission de lumière pour l'émission d'informations à l'unité réceptrice de lumière (11) du dispositif (10) au moyen de signaux lumineux ;
- au moins une unité de réception radio (30) pour la réception d'informations de l'unité d'émission radio (13) du dispositif (10) au moyen de signaux radio ;
- au moins une unité d'évaluation pour la fourniture des informations de position sur la base des informations reçues.

13. Procédé de localisation d'un objet (100), comprenant les étapes suivantes :
- fourniture d'un système selon la revendication 12 ;
- envoi d'informations au moyen d'une unité d'émission de lumière d'au moins un dispositif d'éclairage (20) à position fixe à l'unité réceptrice de lumière (11) du dispositif (10) ;
- envoi d'informations au moyen de l'unité d'émission radio (13) du dispositif (10) à l'unité de réception radio (30) ;
- évaluation des signaux radio reçus par l'unité de réception radio (30) et fourniture d'informations de position sur la base des informations reçues.
